# EUROPEAN PATENT SPECIFICATION

(11) **EP 2 538 095 B1**
(45) Date of publication and mention of the grant of the patent: **08.03.2017**
(21) Application number: 12173111.1
(22) Date of filing: 22.06.2012
(51) Int. Cl.: F16B 45/02

(54) **Snap hook**
Karabiner
Mousqueton

(30) Priority: 23.06.2011 IT MI20111145; 23.06.2011 IT MI20111148
(43) Date of publication of application: 26.12.2012
(73) Proprietor: Camp S.p.A., 23834 Premana (Lecco) (IT)
(72) Inventor: Codega, Antonio, I-23834 Premana, LECCO (IT)
(74) Representative: Long, Giorgio

(56) References cited:
- EP-A1- 1 344 951
- EP-A1- 2 333 359
- US-A1- 2005 229 367

## Description

The present invention relates to a snap hook, particularly a snap hook with a screw lock for mountaineering and climbing.

The sling is a basic accessory for modern climbing. It is used to secure the climber in case of fall and to secure the climbing mate.

The sling comprises a structure formed by technical fabric bands that, surrounding the wearer's hips and thighs, secures him and provides coupling points for necessary gears.

The sling is connected to securing or descent devices by means of a snap hook that, typically, is a snap hook with a screw lock, in order to avoid its accidental release. Such snap hook normally has sufficiently large dimensions to allow, on one hand, its securing to a sling ring, and on the other hand, the insertion of the belay or of the abseil device. Thus, the latter are free to slide along the inner ring of the snap hook making the user to adopt uncomfortable or unpractical and also dangerous positions of the snap hook, due to transversal loads acting on the snap hook itself.

To overcome this drawback, snap hooks having a movable lever dividing the insertion space of the ring of the belay or abseil device from that of the sling ring, have been proposed. However, even this solution has shown drawbacks. First, the space accommodating the sling ring is too small. This is due to the fact that the movable lever shall operate below the hinging point of the spring closing element of the snap hook, thus in the area adjacent to the smaller curve of the snap hook.

Another drawback is that the movable lever can be easily opened if the sling ring is accidentally pushed towards the larger curve of the snap hook, thus hindering the separation function between the two areas that the movable lever should perform.

Thus, the problem lying at the base of the present invention is making available a snap hook solving the above mentioned drawbacks.

Such problem is solved by a snap hook as described in the enclosed claims, whose definitions form an integral part of the present invention.

Thus, an object of the invention is a snap hook equipped with a separation between the ring insertion area of a belay or abseil device and the ring insertion area of a sling, and that allows an easy engagement and disengagement of a belay or abseil device.

A further object is a snap hook as above described that decreases the probability of accidental opening of the separation lever between said two areas.

Yet a further object of the invention is a snap hook equipped with a separation between the ring insertion area of a belay or abseil device and the ring insertion area of a sling that, from the implementation point of view, is easier than state-of-the-art snap hooks.

A snap hook comprising the features of the preamble of claim 1 is known from EP2333359 A1.

Further characteristics and advantages of the present invention will become more evident from the description of a preferred embodiment, that follows as an indication and not as a limitation, with reference to the following figures, in which:
Figure 1 represents a sectional plan view of the snap hook according to the invention;
Figures 2A, 2B and 2C represent plan views of the snap hook of Figure 1, according to an operating sequence;
Figure 3 represents an exploded perspective view of the snap hook according to the invention;
Figure 4 represents a perspective view of a particular of the invention, according to a preferred embodiment.

With reference to figures, the snap hook according to the invention, indicated as a whole with number 1, comprises a ring 2 having a first straight side 3 interrupted by an opening defined by first and second ends 10, 12. The opening is closed by a spring closing element 4 that can have an open position, to allow the insertion in the snap hook 1 of a rope or a ring of a different device, and a closed position, in which the closing element 4 closes the snap hook ring 2, preventing said rope or ring of the different device from exiting.

In an embodiment, the ring 2 has first and second straight sides 3, 5, converging and connected by first and second curves 6, 7, in which the first curve 6 has a curving radius larger than the second curve 7.

The closing element 4 comprises a tubular body 8, in which the length is larger than the first straight side opening 3. The tubular body 8 is hinged by means of a hinge 9 at the first end 10 of the first straight side 3 and has, at the second opposite end 12, a longitudinal blind groove 11 having such shape and size to allow the insertion of the second end 12 of the straight side 3 and its abutment stop inside said groove 11.

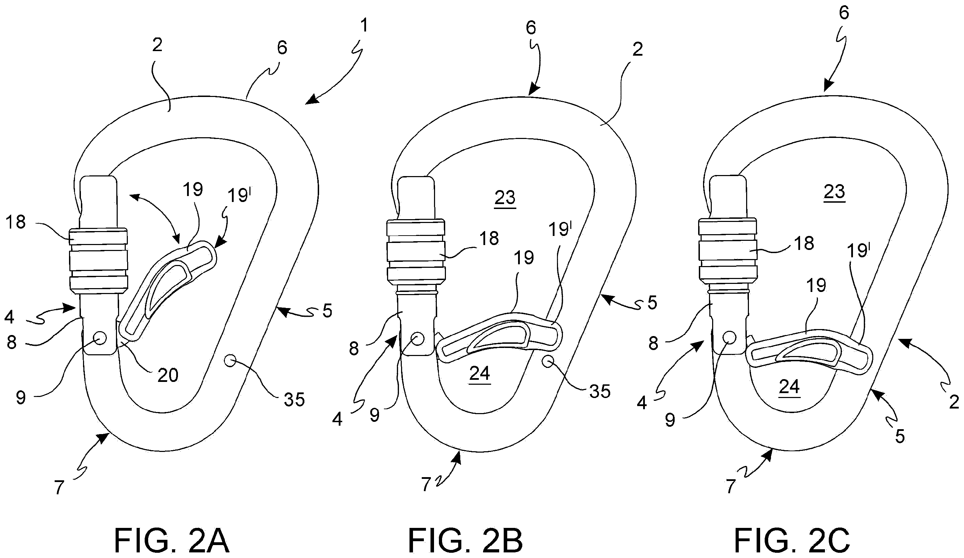

The external surface of the tubular body 8 comprises a thread 17. A screw lock 18 has an inner hole diameter substantially corresponding to, or slightly larger than the external diameter of the tubular body 8, and comprises an inner thread (not shown) meant to cooperate with the thread 17 of the tubular body 8. In this way, the screw lock 18 can slide on the tubular body 8 until total screwing on it and consequent locking of the tubular body 8 in closing position, that is when the groove 11 is filled up with the end 12 of the straight side 3 (Figures 2B or 2C).

Between the hinge 9 and the thread 17, an annular notch 27 is arranged, in which a stop ring 28 is inserted, whose function is to prevent the screw lock 18 from sliding against the hinge 9.

At the hinge 9, the tubular body 8 has a longitudinal through groove 13, transversally drilled by a bore 14. The groove 13 is destined to be placed bridging on the end 10 of the straight side 3 of the snap hook, that in turn has a transversal through bore 15 and a slot 22 on the symmetry plan of the snap hook ring 2.

A lever 19 is hinged on the same hinge 9 articulating the tubular body 8 and protruding inside the space enclosed by the snap hook ring 2.

At one end, the lever 19 has a tab 20 having a through bore 21, whereas the opposite end comprises a portion 19' for engaging the snap hook ring 2.

The tab 20 of the lever 19 is meant to be inserted into the slot 22 of the end 10, in order to align the respective through bores 15, 21.

A pin 16 is inserted through said bores 14, 15, 21 of the tubular body 8, the end 10 and the tab 20, respectively, when they are aligned, thus implementing the hinge 9.

The lever 19 represents separation means between a first area 23 - close to the first curve 6 - and a second area 24 - close to the second curve 7 - of the internal space of ring 2.

As mentioned above, the closing element 4 of the snap hook and the separation means, i.e. the lever 19, are hinged on the same hinge 9. The lever 19 can have first and second separating positions (Figures 2B and 2C, respectively), and one open position (Figure 2A).

The tubular body 8 accommodates in its inner part a blind cavity 25, where elastic means 26 are housed.

Elastic means 26 comprise a helical spring 29 and a leaf spring 30.

The helical spring 29 engages at an end with the bottom of the blind cavity 25, whereas the opposite end is free.

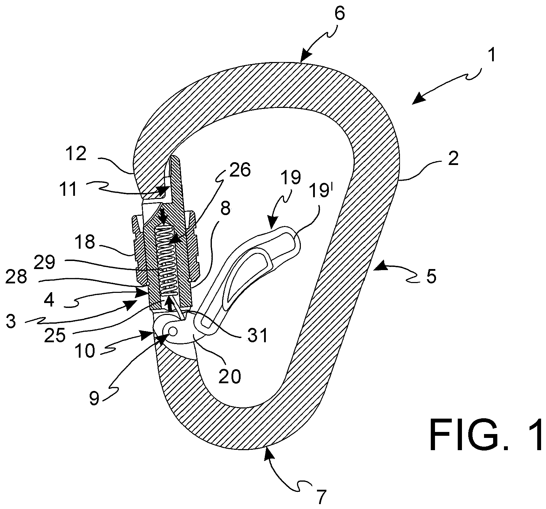

The leaf spring 30 consists of a curved blade 31 having a flexion point 31c, an abutment end 31a, and a holding end 31b, and that comprises, outside the flexion point 31c, a step 32. When the elastic means 26 are assembled, the abutment end 31a presses on the tab 20 of the lever 19 (as shown in Figure 1), whereas the step 32 engages with the free end of the helical spring 29. On the other hand, the holding end 31b of the blade 31 enters through the turns of the helical spring 29 and keeps the blade 31 in position.

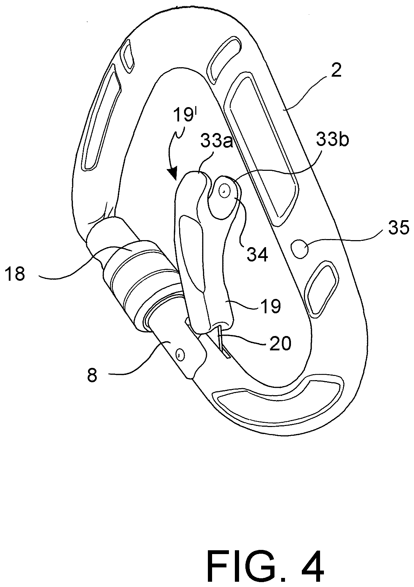

In one embodiment, shown in Figure 4, the engaging portion 19' of lever 19 with the ring 2 has a fork shape, in order to bridge on ring 2, particularly at the closed straight side 5.

On this purpose, portion 19' comprises two opposite arms 33a, 33b, each of them has a relief 34 on the side facing the other arm. Preferably, the relief 34 has rounded profiles, for example a dome profile.

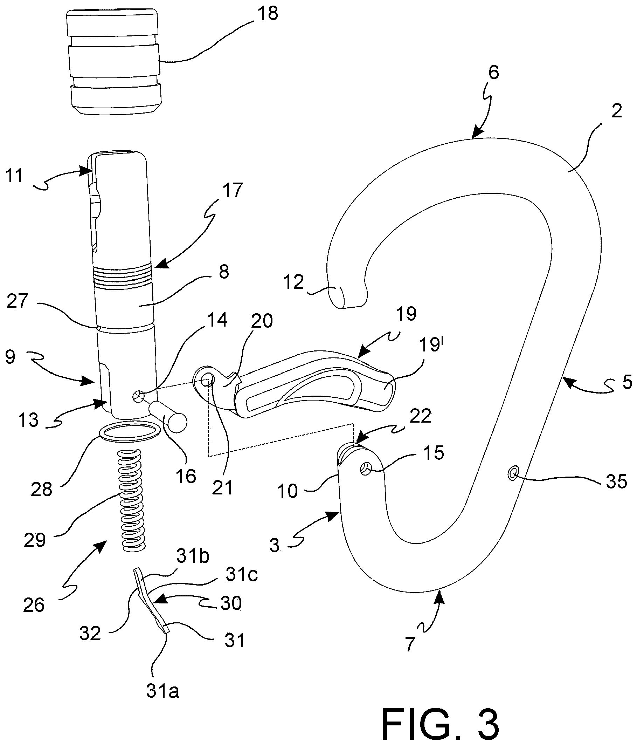

On the straight side 5 of the ring 2, aligned along a transversal axis, two recesses 35 are provided (Figures 3 and 4 show just one of them, since the other one is provided on the hidden face) that are meant to engage, in a shape coupling, with the reliefs 34 of arms 33a, 33b of lever 19.

The operation of the snap hook according to the invention is described below.

The opening and closing of the closing element 4 is performed, as usual, making it swing in the directions shown by the arrow in Figure 2A. When the closing element 4 is open, it is thus possible to engage the snap hook with the sling and insert a different device, such as a belay or an abseil device.

The returning action that closes element 4 is due to the flexion of the blade 31 that, as already stated, is performed by a leaf spring 30.

Now, the screw lock 18 can be screwed on the thread 17 of the tubular body 8, locking the element 4 and preventing its accidental opening (position of the screw lock 18 in Figures 2B and 2C).

The sling ring can be inserted in the area 24 by raising the lever 19 to allow the access to said area (position of the lever 19 in Figure 2A). Such raising movement of the lever 19 is made in contrast with elastic means 26 that tend to recall the lever 19 in the closing position. Actually, the lever 19 raising causes the consequent raising of the blade 31, so that the step 32 of the blade 31 presses against the free end of the helical spring 29, that compresses and elastically recalls towards the initial position, corresponding to the closing of lever 19.

As previously said, the lever 19 can have a first separation position (Figure 2B), in which it simply abuts against ring 2, and a second separation position (Figure 2C), in which reliefs 34 of arms 33a, 33b of the lever 19 engage snapping the corresponding recesses 35 provided on ring 2. This second separation position can be taken thanks to a slight pressure by the user's finger, since rounded profiles of reliefs 34 represent a snapping curtail step. The same consideration applies to the unlocking and opening of the lever 19.

However, it should be noted that such a snapping engagement is normally sufficient, during operation, to prevent an accidental opening of the lever 19, so that an efficient and effective separation of the two areas 23, 24 of the inner space of ring 2 is achieved.

It should also be noted that, in both separation positions (Figures 2B and 2C), the lever 2 is placed bridging on the ring 2, anyway making the separation position of the lever 19 safer.

From what above described, the advantages of the snap hook according to the invention compared to the state of the art are apparent.

First of all, the fact of using a single hinge 9 for the closing element 4 of the snap hook and for the lever 19 to divide the inner space of the ring 2 represents an important simplification from the implementation point of view, making the manufacturing process quicker and more cost-effective.

Also, this same characteristic allows to place the hinging point of the lever 19 as high as possible, thus increasing the useful space in the area 24, compared to snap hooks in which the lever is hinged below the spring closing element of the hinge.

Another advantage is represented in that, although using the same hinge, the closing element 4 and the lever 19 are independent elements and thus can be opened independently one from the other.

At last, the positioning of the lever 19 bridging on the ring 2 increases its stability and its resistance in separation position, both when it simply abuts, and mostly when a snapping engagement is realized with recesses 35 of the ring 2.

It's apparent that the described embodiment is just a particular one of the present invention, which those skilled in the art may modify as necessary to adapt it to particular conditions, without departing from the claimed scope.

## Claims

1. Snap hook (1) comprising a ring (2) having a straight side (3), interrupted by an opening defined by first and second ends (10, 12), in which said opening is closed by a spring closing element (4) that can have an open and a closed position, said snap hook comprising a separation lever (19), dividing the space enclosed by the ring (2) in two separate areas (23, 24), said lever (19) being hinged at one end of the ring (2), in which said lever (19) comprises, at the opposite end of the hinging one, a portion (19') engaging with the ring (2), **characterized in that** said portion (19') is shaped as a fork, in order to be placed bridging on the ring (2), and comprises two opposite arms (33a, 33b), each of them having a relief (34) on the side facing the other arm, said reliefs (34) being meant to engage, in a shape coupling, with respective recesses (35) provided aligned along a transversal axis on the ring (2), in order to realize a snapping engagement.

2. Snap hook (1), according to claim 1, in which the ring (2) has first and second straight sides (3, 5), converging and connected by first and second curves (6, 7), in which the first curve (6) has a curving radius larger than the second curve (7).

3. Snap hook (1), according to claim 1 or 2, in which the reliefs (34) have rounded profiles.

4. Snap hook (1) according to any claim 1 to 3, in which the lever (19) can have a first separation position, in which the portion (19') abuts against the ring (2), and a second separation position, in which the reliefs (34) of the arms (33a, 33b) of the lever (19) engage snapping the corresponding recesses (35) provided on the ring (2).

## Patentansprüche

1. Karabinerhaken (1) umfassend einen Ring (2) aufweisend eine gerade Seite (3), die durch eine Öffnung unterbrochen ist, die durch ein erstes und ein zweites Ende (10, 12) definiert ist, worin die Öffnung durch ein Federschließelement (4) schließbar ist, das eine offene und eine geschlossene Position aufweisen kann, wobei der Karabinerhaken einen Trennhebel (19) umfasst, der den durch den Ring (2) umschlossenen Raum in zwei separate Bereiche (23, 24) aufteilt, wobei der Hebel (19) an einem Ende des Rings (2) angelenkt ist, worin der Hebel (19) an dem dem angelenkten Ende gegenüberliegenden Ende einen Bereich (19') umfasst, der in Eingriff mit dem Ring (2) steht, **dadurch gekennzeichnet, dass** der Bereich (19')
als eine Gabelung ausgebildet ist, um auf dem Ring (2) überbrückend platziert zu werden, und
zwei gegenüberliegende Arme (33a, 33b) umfasst,
wobei jeder von ihnen ein Relief (34) an der auf den anderen Arm gerichteten Seite aufweist, wobei die Reliefs (34) vorgesehen sind zum Eingriff in einer Formkopplung mit entsprechenden Ausnehmungen (35), die entlang einer transversalen Achse auf dem Ring (2) bereitgestellt sind, um einen Schnappeingriff zu realisieren.

2. Karabinerhaken (1) nach Anspruch 1, worin der Ring (2) erste und zweite gerade Seiten (3, 5) aufweist, die zusammenlaufen und verbunden sind durch erste und zweite Kurven (6, 7), worin die erste Kurve (6) einen Krümmungsradius größer als die zweite Kurve (7) aufweist.

3. Karabinerhaken (1) nach Anspruch 1 oder 2, worin die Reliefs (34) gerundete Profile aufweisen.

4. Karabinerhaken (1) nach irgendeinem der Ansprüche 1 bis 3, worin der Hebel (19) eine erste Trennposition, in der der Bereich (19') an dem Ring (2) anliegt, und eine zweite Trennposition aufweisen kann, in der die Reliefs (34) der arme (33a, 33b) des Hebels (19) schnappend mit den entsprechenden Ausnehmungen (35), die auf dem Ring (2) bereitgestellt sind, in Eingriff stehen.

## Revendications

1. Mousqueton (1) comprenant un anneau (2) présentant un côté droit (3), interrompu par une ouverture définie par des première et seconde extrémités (10, 12), dans lequel ladite ouverture est fermée par un élément de fermeture à ressort (4) qui peut présenter une position ouverte et une position fermée, ledit mousqueton comprenant un levier de séparation (19), divisant l'espace entouré par l'anneau (2) en deux zones distinctes (23, 24), ledit levier (19) étant articulé au niveau d'une extrémité de l'anneau (2), dans lequel ledit levier (19) comprend, au niveau de l'extrémité opposée de l'articulation, une partie (19') entrant en prise avec l'anneau (2), **caractérisé en ce que** ladite partie (19') présente la forme d'une fourche, afin d'être placée de manière à former un pont sur l'anneau (2), et comprend deux bras opposés (33a, 33b), chacun d'entre eux présentant un relief (34) sur le côté faisant face à l'autre bras, lesdits reliefs (34) étant destinés à entrer en prise, dans un accouplement de forme, avec des évidements respectifs (35) alignés le long d'un axe transversal sur l'anneau (2), afin de réaliser une mise en prise par encliquetage.

2. Mousqueton (1) selon la revendication 1, dans lequel l'anneau (2) présente des premier et second côtés droits (3, 5), convergents et raccordés par des première et seconde courbes (6, 7), dans lequel la première courbe (6) présente un rayon de courbure supérieur à celui de la seconde courbe (7).

3. Mousqueton (1) selon la revendication 1 ou 2, dans lequel les reliefs (34) présentent des profils arrondis.

4. Mousqueton (1) selon l'une quelconque des revendications 1 à 3, dans lequel le levier (19) peut présenter une première position de séparation, dans laquelle la partie (19') vient buter contre l'anneau (2), et une seconde position de séparation, dans laquelle les reliefs (34) des bras (33a, 33b) du levier (19) entrent en prise par encliquetage avec les évidements correspondants (35) disposés sur l'anneau (2).
